# FASCICULE DE BREVET EUROPEEN

(11) **EP 0 994 923 B1**
(45) Date de publication et mention de la délivrance du brevet: **25.01.2006**
(21) Numéro de dépôt: 99918030.0
(22) Date de dépôt: 07.05.1999
(51) Int. Cl.: C08L 95/00, C08J 3/03, E01C 7/08

(54) **PROCEDE DE PREPARATION D'UNE EMULSION DE BITUME, EMULSION OBTENUE ET SON UTILISATION**
VERFAHREN ZUR HERSTELLUNG EINER BITUMEN-EMULSION, ERHALTENE EMULSION UND IHRE VERWENDUNG
METHOD FOR PREPARING A BITUMEN EMULSION, RESULTING EMULSION AND USE THEREOF

(30) Priorité: 07.05.1998 FR 9805842
(43) Date de publication de la demande: 26.04.2000
(73) Titulaire: COLAS, 92653 Boulogne-Billancourt Cédex (FR)
(72) Inventeur: SAMANOS, Jacques, 94440 Villecresnes (FR)
(74) Mandataire: Bernasconi, Jean Raymond
(86) Numéro de dépôt international: PCT/FR1999/001093
(87) Numéro de publication internationale: WO 1999/057199

(56) Documents cités:
- FR-A- 2 505 851

## Description

L'invention concerne un procédé de préparation d'émulsions de liant bitumineux utilisables dans la construction et l'entretien des chaussées.

De façon classique, les émulsions de liant bitumineux sont préparées par mélange dans un mélangeur approprié d'une phase dispersée et d'une phase dispersante. La phase dispersée peut être constituée soit de bitume pur, soit d'un bitume mélangé à un fluxant, un fluidifiant ou/et un élastomère, c'est-à-dire un bitume modifié. La phase dispersante comprend notamment de l'eau et divers agents émulsifiants ou tensioactifs. Comme exemple de mélangeur on peut citer les moulins colloïdaux et les mélangeurs statiques.

Plus généralement, les mélangeurs qui conviennent assurent un cisaillement des phases en présence pendant le mélange.

En variante, il est également connu d'ajouter le tensioactif ou un tensioactif additionnel à la phase dispersée.

Lorsque le tensioactif utilisé pour la fabrication de l'émulsion est cationique ou non ionique, l'émulsion contient généralement de 50 à 70 % en poids de liant bitumineux. Lorsque le tensioactif utilisé est anionique, la concentration de l'émulsion en liant est de façon conventionnelle de 50 à 65 % en poids. Les émulsions obtenues à partir de tensioactifs anioniques sont habituellement plus fines et plus visqueuses que celles comprenant des tensioactifs cationiques.

Selon le procédé de l'art antérieur, il est possible, en jouant sur la nature et la quantité de tensioactif utilisé, de contrôler la stabilité de l'émulsion, c'est-à-dire aussi bien sa stabilité au stockage que sa stabilité à la rupture.

Plus précisément, il est connu dans la technique qu'en augmentant la quantité d'émulsifiant, on peut diminuer la vitesse de rupture de l'émulsion et augmenter sa stabilité au stockage.

Cependant, la quantité d'émulsifiant ajoutée influe également sur la finesse de l'émulsion résultante et sur sa viscosité, si bien que selon la technique antérieure, un compromis doit être accepté en vue d'optimiser la vitesse de rupture de l'émulsion, sa viscosité et les propriétés associées à la finesse de l'émulsion.

Le procédé de l'invention permet un meilleur contrôle de la vitesse de rupture quasi-indépendamment de la viscosité et de la répartition granulométrique de l'émulsion.

Les émulsions de l'invention présentent une viscosité élevée par comparaison avec les émulsions de même formulation obtenues selon les procédés de l'art antérieur. Or, des émulsions visqueuses sont particulièrement souhaitables pour certaines applications telles que la réalisation d'enduits superficiels devant être appliqués sur des routes à forte pente ou fort devers.

De façon inattendue, les inventeurs se sont rendu compte que le procédé de l'invention aboutit à la préparation d'émulsions présentant une distribution de la taille des gouttelettes de la phase dispersée (désignée distribution granulométrique dans la suite) plus resserrée et donc de viscosité plus élevée. Les autres avantages du procédé de l'invention apparaitront facilement à l'homme du métier à la lecture de la présente description.

Plus précisément, le procédé de l'invention comprend :
a) la préparation d'une émulsion primaire concentrée contenant un émulsifiant et au moins 65 % en poids dans le cas d'une émulsion anionique, respectivement au moins 70 % en poids dans le cas des autres émulsions, de liant bitumineux, par mélange sous l'effet d'une énergie mécanique de cisaillement et en présence dudit émulsifiant d'une phase aqueuse initiale et d'une phase bitumineuse liquide ; et
b) l'addition d'une phase aqueuse de dilution à ladite émulsion primaire , caractérisé en ce que l'émulsifiant de l'émulsion primaire concentrée est constitué par un tensoiactif anionique, cationique ou zwitterionique.

Les émulsions préparées selon le procédé de l'invention présentent une viscosité supérieure à celle d'une émulsion correspondante de même formulation, obtenue par mélange d'une phase aqueuse et d'une phase bitumineuse sous l'effet de la même énergie mécanique de cisaillement que mise en jeu pour la préparation de l'émulsion primaire. Généralement, la viscosité est supérieure d'au moins 20 % à celle de l'émulsion correspondante.

Par liant bitumineux on entend selon l'invention, les bitumes de distillation directe, de désasphaltage ou oxydés, à l'état pur, fluidifiés ou fluxés. Comme il est connu, les liants hydrocarbonés peuvent être fluidifiés par des solvants pétroliers légers tels que du kérosène, et fluxés par des huiles provenant de la houille ou du pétrole. Comme autre exemple de liant bitumineux, on peut également citer les bitumes acides du type des dérivés de l'acide naphténique. Ces mêmes liants peuvent être utilisés sous forme modifiée par ajout d'un ou plusieurs polymères, de résines organiques ou bien de poudrettes de caoutchouc recyclé.

L'émulsion primaire est préparée de façon connue en soi par mélange, sous cisaillement, d'une phase aqueuse initiale avec une phase bitumineuse liquide contenant le liant bitumineux, en présence d'un tensioactif.

Le mélange sous cisaillement peut être réalisé dans les mélangeurs conventionnels utilisés dans la technique pour la préparation des émulsions de bitume. Ce type de mélange peut être réalisé à l'aide de moulins colloïdaux, de turbines, de pompes ou équivalents ou encore à l'aide de mélangeurs statiques.

Lorsque le mélange est réalisé en continu, la phase aqueuse et la phase bitumineuse liquide sont introduites dans les proportions permettant d'obtenir directement la concentration désirée pour l'émulsion primaire.

Le mélange peut également être réalisé en discontinu par enrichissement progressif de la phase aqueuse initiale, maintenue sous agitation mécanique dans un mélangeur approprié, en phase bitumineuse liquide jusqu'à obtention de la concentration désirée pour l'émulsion primaire.

L'émulsion primaire peut être une émulsion directe (huile dans l'eau) ou inverse (eau dans l'huile).

La température à laquelle est introduite la phase bitumineuse dans le mélangeur est suffisante pour maintenir le liant bitumineux à l'état liquide. Une température supérieure à 100° C est généralement nécessaire.

L'homme du métier s'appliquera à éviter que l'émulsion primaire n'entre en ébullition en sortie du mélangeur.

A cette fin, il convient d'ajuster les températures respectives de la phase aqueuse et de la phase bitumineuse devant être introduites dans le mélangeur et, au besoin, de réaliser le mélange sous pression.

A titre d'indication, une température comprise entre la température ambiante et 70° C est généralement appropriée pour la phase aqueuse initiale.

L'émulsion primaire est soit anionique (en ce cas elle est préparée en présence d'un tensioactif anionique), soit cationique (auquel cas le tensioactif est cationique). Les émulsions cationiques sont préférées dans le cadre de l'invention.

Selon l'invention, on peut envisager la préparation de tout autre type d'émulsion primaire, par exemple une émulsion primaire préparée à l'aide d'un tensioactif zwitterionique.

Les tensioactifs utilisables selon l'invention sont ceux généralement utilisés dans la technique pour la préparation d'émulsion de bitume et peuvent être cationiques, anioniques, ou zwitterioniques.

Le tensioactif peut être ajouté à la phase aqueuse initiale, à la phase bitumineuse ou en partie à chacune de ces deux phases.

En règle générale, la totalité du tensioactif est ajoutée à la phase aqueuse initiale. Toutefois, l'addition de tout ou partie dudit tensioactif à la phase bitumineuse lors de la préparation de l'émulsion primaire conduit à une plus grande finesse de l'émulsion primaire, c'est-à-dire que le diamètre moyen des gouttelettes de l'émulsion primaire est plus petit que lorsque le tensioactif est en totalité présent dans la phase aqueuse.

La quantité de tensioactif devant être utilisée lors de la préparation de l'émulsion primaire sera facilement déterminée par l'homme du métier en fonction de l'utilisation finale envisagée pour l'émulsion de liant bitumineux.

A titre d'indication toutefois, on peut noter qu'une quantité de tensioactif inférieure à 20 kg par tonne d'émulsion primaire suffit généralement.

Lorsque le tensioactif est cationique, une quantité de tensioactif de 0,5 à 10 kg/t est normalement appropriée.

Plus généralement, lors du dosage du tensioactif, l'homme du métier tiendra compte des propriétés de stabilité souhaitée de l'émulsion finale, de la vitesse de rupture souhaitée, ainsi que de la nature du tensioactif.

On notera cependant que, selon l'invention, le tensioactif peut être directement inclus dans la structure même du liant bitumineux. C'est notamment le cas des bitumes acides de type acide naphténique qui comportent dans leur structure des fonctions à activité émulsifiante. Dans ce cas, la présence d'un tensioactif additionnel, dans l'une des deux phases, n'est pas nécessaire lors de la préparation de l'émulsion primaire. L'addition d'une base organique ou minérale à la phase aqueuse initiale est alors suffisante.

Les quantités respectives de phase aqueuse initiale et de phase bitumineuse à mélanger pour la préparation de l'émulsion primaire dépendent de la concentration souhaitée en liant bitumineux de l'émulsion primaire.

Lorsque l'émulsion primaire est une émulsion cationique, ou zwitterionique, la concentration en liant de l'émulsion primaire est d'au moins 70% en poids, de préférence supérieure à 70% en poids, notamment comprise entre 72 et 97 % en poids, mieux encore entre 75 et 97 % en poids, par exemple entre 80 et 95% en poids.

Lorsque l'émulsion primaire est anionique, la concentration en liant de l'émulsion primaire est d'au moins 65 % en poids, de préférence comprise entre 65 et 97 % en poids, notamment supérieure à 70%, mieux encore comprise entre 70 et 95 % en poids, par exemple entre 72 et 90 %.

Selon l'invention, il est essentiel de procéder à la dilution de l'émulsion primaire par addition d'une phase aqueuse.

La dilution ne modifie pratiquement pas ni la distribution granulométrique, ni le diamètre moyen des gouttelettes de l'émulsion primaire. Elle conduit en outre à une émulsion directe (huile dans l'eau).

L'addition de la phase aqueuse peut être réalisée en continu ou de façon discontinue. Suivant le cas, le procédé de l'invention est mis en oeuvre en continu ou en discontinu. La méthode utilisée pour réaliser la dilution n'est pas essentielle selon l'invention.

Une façon simple de réaliser la dilution en procédant de façon continue est de réunir deux flux convergents, l'un constitué de la phase aqueuse de dilution, l'autre constitué de l'émulsion primaire.

Lorsqu'on procède en discontinu, la phase aqueuse de dilution est introduite dans l'émulsion primaire maintenue sous agitation.

La température de la phase aqueuse de dilution est avantageusement inférieure à 100° C, de préférence inférieure à 50° C, par exemple comprise entre 18 et 25° C.

De manière particulièrement avantageuse, la dilution est réalisée aussitôt après formation de l'émulsion primaire (c'est-à-dire sans stockage intermédiaire de l'émulsion primaire), auquel cas il est intéressant d'utiliser la phase aqueuse de dilution pour refroidir, si nécessaire, l'émulsion primaire.

Selon un autre mode de réalisation de l'invention, il est possible de stocker l'émulsion primaire avant dilution. Il est essentiel pour ce stockage d'éviter des températures trop basses qui pourraient entraîner le gel de l'émulsion (et donc sa rupture). Ainsi, une température de stockage appropriée est comprise entre 70 et 95° C, ou plus élevée, à condition d'adapter la pression de stockage pour éviter l'ébullition.

La quantité de phase aqueuse de dilution devant être ajoutée dépend de la concentration en liant souhaitée pour l'émulsion finale.

Généralement, lorsque l'émulsion primaire est cationique la concentration finale en liant de l'émulsion sera de 50 à 70 % en poids, de préférence de 60 à 70 %.

Par contre, lorsque l'émulsion primaire est anionique, on préférera une concentration finale en liant de l'émulsion entre 50 et 65 % en poids.

Lorsqu'on souhaite préparer une émulsion de bitume présentant une vitesse de rupture élevée, il est recommandé de sélectionner, pour la mise en oeuvre du procédé de l'invention, une phase aqueuse de dilution dépourvue de tensioactif.

En variante, la phase aqueuse de dilution de l'invention peut contenir un tensioactif supplémentaire. Dans ce cas, la vitesse de rupture est plus faible.

Ce tensioactif peut être anionique, cationique, ou zwitterionique, pourvu qu'il soit compatible avec le tensioactif de l'émulsion primaire.

Il est également possible de moduler certaines caractéristiques de l'émulsion comme la stabilité de l'émulsion, la vitesse de rupture et la viscosité, en ajoutant à l'émulsion ainsi obtenue une ou plusieurs autres phases aqueuses additionnelles, chaque phase aqueuse additionnelle contenant un ou plusieurs tensioactifs additionnels. Là encore, la condition de compatibilité entre les différents tensioactifs doit être vérifiée.

La quantité totale de tensioactif présente dans l'émulsion est un paramètre influant sur certaines des propriétés de l'émulsion telle que sa stabilité. En conséquence, la quantité de tensioactifs supplémentaires sera ajustée en fonction de l'utilisation finale de l'émulsion.

En règle générale néanmoins, la quantité totale de tensioactif ne dépassera pas 20 kg par tonne d'émulsion et, dans le cas de tensioactifs cationiques, ne dépassera pas 10 kg/t.

Lorsque l'émulsion de liant bitumineux est destinée à l'entretien des chaussées, l'émulsion finale contient préférablement de 0,05 à 1,5% en poids, mieux encore de 0,1 à 1% en poids de tensioactif.

En tant que constituants additionnels, la phase aqueuse de dilution, la phase aqueuse initiale ou/et la phase bitumineuse liquide peuvent contenir les additifs usuels utilisés dans la technique et notamment des solvants ou/et polymères variés tels que ceux favorisant l'adhésion ou "collage" de l'émulsion, c'est-à-dire l'aptitude de l'émulsion à entrer en contact avec les corps en présence tels que les gravillons et granulats.

D'autres additifs sont les stabilisants, les agents anti-gel, les agents épaississants ou les latex naturels ou synthétiques, lesquels sont préférablement ajoutés à la phase aqueuse initiale ou à la phase aqueuse de dilution.

Des exemples de latex synthétiques sont un latex de SBS (styrène-butadiène-styrène), un latex de SBR (caoutchouc styrène-butadiène) et un latex de polychloroprène. On notera à ce propos que l'addition de latex à la phase aqueuse est habituellement réalisée lors de l'utilisation de liant bitumineux non modifié.

Lorsque la dilution est obtenue par addition d'une ou plusieurs phases aqueuses additionnelles, il doit être entendu que chacune de ces phases peut contenir de tels additifs.

Il en résulte qu'un avantage du procédé de l'invention est que, grâce à l'étape de dilution, il est possible de conférer à l'émulsion finale des propriétés particulières par addition d'additifs appropriés. Une telle liberté de manoeuvre n'était pas possible dans le cas des procédés classiques de préparation où la totalité des constituants de l'émulsion est ajoutée initialement.

Les émultions ainsi obtenues peuvent notamment être utilisées pour la préparation d'enduits superficiels, de couches d'accrochage ou de couches de cure, d'enrobés, de graves-émulsion, de coulis bitumineux, d'enrobés coulés à froid.

Selon le procédé de l'invention, il est possible de contrôler de façon indépendante la finesse de l'émulsion et la viscosité (ou la distribution granulométrique). En effet, selon l'invention, la viscosité de l'émulsion finale dépend principalement de la concentration de l'émulsion primaire en liant bitumineux alors que la nature et la quantité de tensioactif contenu dans l'émulsion primaire influencent majoritairement la finesse de l'émulsion.

En outre, le procédé de l'invention permet un contrôle amélioré de la vitesse de rupture et ceci indépendamment ou presque de la quantité et de la nature de l'émulsifiant initialement présent dans l'émulsion primaire. Ce contrôle est réalisé par addition de tensioactifs supplémentaires ou stabilisants dans la phase aqueuse de dilution.

Un autre avantage du procédé de l'invention est qu'il conduit à une augmentation de la capacité de production des installations classiques de fabrication des émulsions du fait de la dilution finale.

On notera enfin que le procédé de l'invention peut être mis en oeuvre sur les installations conventionnelles prévues pour la fabrication d'émulsions de bitumes moyennant des modifications mineures permettant la dilution de l'émulsion primaire.

L'émulsion ainsi obtenue peut être stockée avant utilisation. Elle sera de préférence maintenue à une température comprise entre 20 et 70° C. De façon avantageuse, l'émulsion est conservée à une température de 40 à 50° C par calorifugeage des récipients de stockage.

Les exemples suivants sont donnés à titre d'illustration. Ils décrivent des émulsions particulièrement appropriées à la préparation d'enduits superficiels.

### EXEMPLE 1

Une émulsion à 65 % de liant bitumineux est préparée selon le procédé de l'invention. Le mélangeur utilisé est un moulin colloïdal (désigné de type A dans la suite).

L'émulsion primaire est préparée par mélange direct de 800 kg de bitume 180/220 à 130° C et d'une phase aqueuse initiale à 50° C contenant 1,85 kg d'un émulsifiant de type suif alkyl-triméthylènediamine (DINORAM® S), 1,6 kg d'acide chlorhydrique à 32 % et 200 kg d'eau.

Puis en sortie du moulin colloïdal, l'émulsion primaire est diluée par 230 kg d'eau à température ambiante (≈ 20° C).

L'émulsion résultante comprend 1,5 kg d'émulsifiant par tonne d'émulsion et 1,3 kg d'acide chlorhydrique par tonne d'émulsion.

Les caractéristiques de l'émulsion résultante diluée sont rapportées dans le tableau 1, étant entendu que l'indice de rupture est mesuré conformément à la norme française NFT 66-017 et la viscosité STV est mesurée conformément à la norme française NFT 66-005 en utilisant le récipient dont l'orifice est de 4 mm de diamètre. En outre, la distribution granulométrique des gouttelettes de la phase dispersée a été directement obtenue en utilisant un compteur COULTER.

### EXEMPLE COMPARATIF 1

A titre de comparaison, une émulsion à 65 % de liant bitumineux est préparée à partir des mêmes ingrédients en utilisant le procédé classique consistant à introduire dans un moulin colloïdal la phase bitumineuse (bitume 180/220) à 130° C et la phase aqueuse à 50° C dans les proportions permettant d'obtenir directement la concentration en liant désiré. Le moulin utilisé est le moulin colloïdal de type A utilisé à l'exemple 1. Les quantités respectives des constituants de l'émulsion sont les suivantes :

| | |
|---|---|
| bitume 180/220 : | 650 kg |
| DINORAM® S : | 1,5 kg |
| HCl à 32 % : | 1,3kg |
| eau | 347,20 kg |
| TOTAL | 1.000 kg |

Les caractéristiques de l'émulsion ainsi préparée ont été mesurées dans les mêmes conditions qu'à l'exemple 1. Elles sont rapportées au tableau 1.

**TABLEAU 1**

| Caractéristiques | Emulsion | |
|---|---|---|
| | Exemple 1 | Ex. comparatif 1 |
| Refus à 630 µm (%) ⁽¹⁾ | 0,01 | 0,07 |
| Refus à 160 µm (%) ⁽²⁾ | 0,02 | 0,13 |
| Teneur en eau (%) | 34,1 | 34,2 |
| pH | 2,8 | 2,8 |
| indice de rupture | 71 | 78 |
| viscosité STV (s) | 21 | 9 |
| diamètre moyen des gouttelettes de la phase dispersée | 4,0 | 4,9 |
| déviation standard ⁽³⁾ | 0,32 | 0,38 |

| | | |
|---|---|---|
| ⁽¹⁾ Le refus à 630 µm est le pourcentage de particules retenues par un tamis arrêtant les particules présentant un diamètre supérieur ou égal à 630 µm. | | |
| ⁽²⁾ Le refus à 160 µm est le pourcentage de particules retenues par un tamis arrêtant les particules présentant un diamètre supérieur ou égal à 160 µm. | | |
| ⁽³⁾ La déviation standard est une caractéristique de la distribution granulométrique. Elle est donnée par l'équation DS = - 0,5 log (D₁₆/D₈₄) où DS est la déviation standard, D₁₆ est le diamètre des gouttelettes à 16 % de passant et D₈₄ est le diamètre des gouttelettes à 84 % de passant. | | |

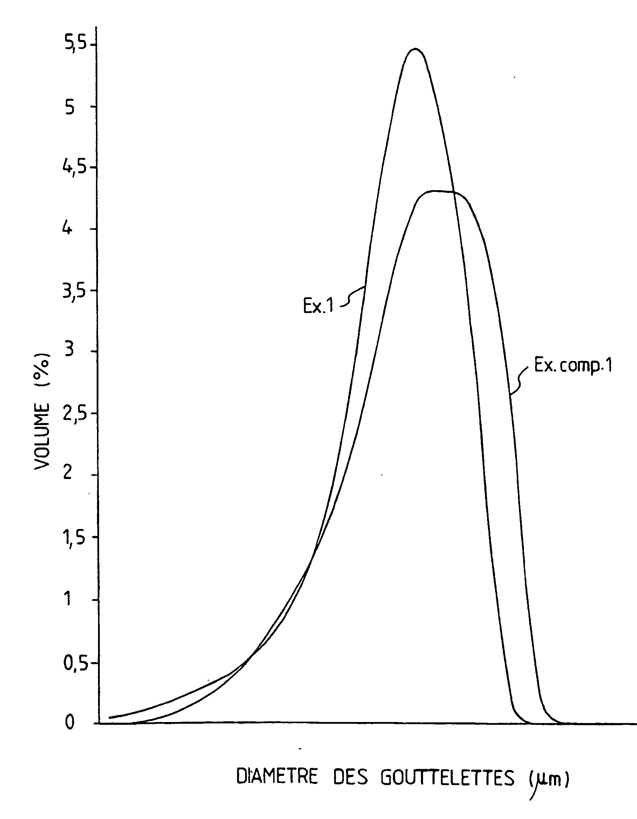

Les distributions granulométriques obtenues dans le cas de l'exemple 1 et de l'exemple comparatif 1 ont été représentées à la figure 1.

Sur cette figure 1, l'axe des ordonnées correspond au volume occupé par les gouttelettes (en pourcentage par rapport au volume total de l'émulsion) et l'axe des abscisses correspond au diamètre des gouttelettes de la phase dispersée (en µm). Plus la déviation standard de la distribution granulométrique est faible, plus la distribution est étroite.

Il résulte du tableau 1 et de la figure 1 que l'émulsion préparée selon le procédé de l'invention (ex. 1) présente une distribution granulométrique plus resserrée que l'émulsion de l'exemple comparatif 1 (cf. déviation standard et figure 1).

De même, on constate que l'émulsion de l'invention est caractérisée par une viscosité plus importante et un diamètre moyen (moyenne arithmétique) plus faible. On note par ailleurs que le pourcentage de grosses gouttelettes a été réduit par utilisation du procédé de l'invention (cf. les valeurs de refus). Par ailleurs, il est facile de constater que dans le cas de l'émulsion de l'invention, l'indice de rupture obtenu est plus faible.

### EXEMPLE 2

En utilisant le protocole opératoire de l'exemple 1 mais à l'aide d'un modèle différent de moulin colloïdal (désigné de type B dans la suite) et à partir des quantités suivantes de constituants, on prépare une émulsion à 65 % de liant bitumineux conforme à l'invention.

### a) Emulsion primaire

*phase bitumineuse à 125° C :*

| | |
|---|---|
| bitume 180/220 fluxé (comprenant 2,3 % de fluxant) : | 900 kg |

*phase aqueuse initiale à 37° C* :

| | |
|---|---|
| émulsifiant de type alkylamidoamine: | 2,1 kg |
| acide chlorhydrique à 32 % : | 1,94 kg |
| eau : | 96,0 kg |

### b) Emulsion diluée:

| | |
|---|---|
| eau de dilution à 20° C : | 384,7 kg |

On notera que la teneur en émulsifiant de cette émulsion est de 1,5 kg par tonne d'émulsion et sa teneur en acide chlorhydrique à 32 % est de 1,4 kg par tonne d'émulsion.

### EXEMPLE COMPARATIF 2

Conformément au protocole opératoire de l'exemple comparatif 1 mais en utilisant le moulin colloïdal de type B, on prépare une émulsion à 65 % de liant bitumineux à partir des ingrédients suivants :

| | |
|---|---|
| bitume 180/220 fluxé (comprenant 2,3 % de fluxant) : | 650 kg |
| émulsifiant de type alkylamidoamine : | 1,5 kg |
| acide chlorhydrique à 32 % : | 1,4 kg |
| eau : | 347,1 kg |
| TOTAL | 1.000 kg. |

### EXEMPLE 3

En utilisant le protocole opératoire de l'exemple 2, on prépare une émulsion à 69 % de liant bitumineux conforme à l'invention à partir des constituants suivants :

### a) Emulsion primaire :

*phase bitumineuse à 125° C :*

| | |
|---|---|
| bitume 180/220 fluxé (comprenant 2,17 % de fluxant) : | 850 kg |

*phase aqueuse initiale à 37° C :*

| | |
|---|---|
| émulsifiant de type alkylamidoamine : | 2,09 kg |
| HCl à 32 % : | 1,85 kg |
| eau | 146,1 kg |

### b) Emulsion diluée :

| | |
|---|---|
| eau de dilution à 20° C : | 231,8 kg. |

### EXEMPLE 4

En utilisant le protocole opératoire de l'exemple 2, on prépare une émulsion à 69 % de liant bitumineux conforme à l'invention à partir des constituants suivants :

### a) Emulsion primaire :

*phase bitumineuse à 125° C :*

| | |
|---|---|
| bitume 180/220 fluxé (comprenant 2,17 % de fluxant) : | 900 kg |

*phase aqueuse initiale à 37° C :*

| | |
|---|---|
| émulsifiant de type alkylamidoamine : | 2,22 kg |
| HCl à 32 % : | 1,95 kg |
| eau : | 95,8 kg |

### Emulsion diluée :

| | |
|---|---|
| eau de dilution à 20° C : | 304,4 kg. |

La teneur en émulsifiant des émulsions des exemples 3 et 4 est de 1,7 kg par tonne d'émulsion et leur teneur en acide chlorhydrique à 32 % est de 1,5 kg par tonne d'émulsion.

### EXEMPLE COMPARATIF 3

Conformément au protocole opératoire de l'exemple comparatif 1 mais en utilisant le moulin colloïdal de type B, on prépare une émulsion à 69 % de liant bitumineux à partir des ingrédients suivants :

| | |
|---|---|
| bitume 180/220 fluxé (comprenant 2,17 % de fluxant) : | 690 kg |
| émulsifiant de type alkylamidoamine : | 1,7 kg |
| acide chlorhydrique à 32 % : | 1,5 kg |
| eau : | 306,8 kg |
| TOTAL | 1,000 kg. |

Le tableau 2 résume les caractéristiques des émulsions préparées aux exemples 2 à 4 et aux exemples comparatifs 2 et 3.

Les différents paramètres sont mesurés dans les mêmes conditions qu'à l'exemple 1.

**TABLEAU 2**

| Caractéristiques | Exemples | | | | |
|---|---|---|---|---|---|
| | Exemple 2 | Ex. comp. 2 | Exemple 3 | Exemple 4 | Ex. comp. 3 |
| teneur en eau (kg) | 353 | 353 | 312 | 315 | 311 |
| indice de rupture | 69 | 81 | 89 | 69 | 83 |
| viscosité STV (s) | 21 | 8 | 375 ⁽¹⁾ | 554 ⁽¹⁾ | 133 |
| diamètre moyen des gouttelettes de la phase dispersée (µm) | 6,2 | 8,8 | 7,5 | 5,9 | 8,5 |
| déviation standard | 0,29 | 0,33 | 0,30 | 0,28 | 0,33 |

| | | | | | |
|---|---|---|---|---|---|
| ⁽¹⁾ La mesure de la viscosité STV a été effectuée selon la norme française NFT 66-005 mais en utilisant le récipient dont l'orifice est de 10 mm de diamètre. | | | | | |

Ce tableau confirme qu'à concentration égale en liant bitumineux de l'émulsion finale, les émulsions de l'invention présentent une distribution granulométrique plus étroite et donc, une viscosité plus élevée. Ceci résulte notamment d'une comparaison de l'émulsion de l'exemple 2 avec l'émulsion de l'exemple comparatif 2 ainsi que d'une comparaison de l'émulsion de l'exemple comparatif 3 avec les émulsions des exemples 3 et 4 conformes à l'invention.

## Revendications

1. Procédé pour la fabrication d'une émulsion de liant bitumineux adaptée à la construction et l'entretien de chaussées, et ayant une vitesse de rupture contrôlée, ledit procédé comprenant:
a) la préparation d'une émulsion primaire concentrée contenant un émulsifiant au moins 65 % en poids dans le cas d'une émulsion anionique, respectivement au moins 70 % en poids dans le cas des autres émulsions, de liant bitumineux, par mélange sous l'effet d'une énergie mécanique de cisaillement et en présence dudit émulsifiant, d'une phase aqueuse initiale et d'une phase bitumineuse liquide , ce mélange étant réalisé en continu, la phase aqueuse et la phase bitumineuse liquide étant introduites dans les proportions permettant d'obtenir directement la concentration désirée pour l'émulsion primaire; et
b) l'addition d'une phase aqueuse de dilution à ladite émulsion primaire , **caractérisé en ce que** l'émulsifiant de l'émulsion primaire concentrée est constitué par un tensioactif anionique, cationique ou zwitterionique.

2. Procédé selon la revendication 1, **caractérisé en ce qu'**à l'étape a) ledit tensioactif est présent en totalité dans ladite phase aqueuse initiale.

3. Procédé selon la revendication 1, **caractérisé en ce qu'**à l'étape a) ledit tensioactif est présent en tout ou partie dans ladite phase bitumineuse liquide.

4. Procédé selon l'une quelconque des revendications 1 à 3, **caractérisé en** ca qu'à l'étape a) ledit tensioactif est un tensioactif cationique.

5. Procédé selon la revendication 4, **caractérisé en ce qu'**à l'étape a) la quantité de phase aqueuse initiale est telle qu'elle conduit à une émulsion primaire contenant de 75 à 97 % en poids de liant bitumineux, de préférence de 80 à 95 % en poids.

6. Procédé selon l'une quelconque des revendications 4 et 5, **caractérisé en ce qu'à** l'étape b) la quantité de phase aqueuse de dilution est telle qu'elle conduit à une émulsion contenant de 50 à 70 % en poids de liant bitumineux.

7. Procédé selon l'une quelconque des revendications précédentes, **caractérisé en ce que** la phase aqueuse initiale comprend en outre un latex naturel ou synthétique et **en ce que** le liant bitumineux est un liant bitumineux non modifié.

8. Procédé selon l'une quelconque des revendications précédentes, **caractérisé en ce que** l'étape b) est réalisée sans stockage intermédiaire de l'émulsion primaire.

9. Procédé selon l'une quelconque des revendications précédentes, **caractérisé en ce qu'**à l'étape b) ladite phase aqueuse de dilution ne comprend pas de tensioactif.

10. Procédé selon l'une quelconque des revendications 1 à 9, **caractérisé en ce qu'**à l'étape b) ladite phase aqueuse de dilution comprend un tensioactif supplémentaire compatible avec la tensioactif utilisé lors de la préparation de l'émulsion primaire.

11. Procédé selon l'une quelconque des revendications précédentes, **caractérisé en ce qu'**à l'étape b) la température de la phase aqueuse de dilution est de 20 à 50° C.

12. Procédé selon l'une quelconque des revendications précédentes, **caractérisé en ce qu'**il comprend l'étape supplémentaire consistant à diluer à nouveau l'émulsion obtenue, par addition d'une ou plusieurs phases aqueuses additionnelles de dilution.

13. Procédé selon la revendication 12, **caractérisé en ce que** chaque phase aqueuse additionnelle de dilution comprend un ou plusieurs tensioactifs additionnels.

14. Procédé selon l'une quelconque des revendications 12 ou 13, **caractérisé en ce que** chaque phase aqueuse additionnelle comprend un ou plusieurs additifs tels que des agents anti-gel, des stabilisants, des agents épaississants ou des latex naturels ou synthétiques.

15. Procédé selon l'une quelconque des revendications précédentes, **caractérisé en ce que** l'émulsion résultante présente une viscosité supérieure à celle de l'émulsion correspondante, de même formulation, obtenue par mélange sous l'effet de la même énergie de cisaillement d'une phase aqueuse et d'une phase bitumineuse.

## Patentansprüche

1. Verfahren zur Herstellung einer Emulsion von bituminösem Bindemittel, geeignet für die Konstruktion und die Instandhaltung von Strassen und mit einer kontrollierten Brechgeschwindigkeit, wobei dieses Verfahren umfaßt:
a) die Herstellung einer konzentrierten Primäremulsion, welche einen Emulgator mit wenigstens 65 Gew.-% im Fall einer anionischen Emulsion bzw. wenigstens 70 Gew.-% im Fall von anderen Emulsionen von bituminösem Bindemittel enthält, durch Mischen unter Einwirkung von einer mechanischen Scherenergie und in Anwesenheit dieses Emulgators von einer wässrigen Anfangsphase und einer flüssigen bituminösen Phase, wobei diese Mischung kontinuierlich hergestellt wird, die wässrige Phase und die flüssige bituminöse Phase in Anteilen eingeführt werden, welche den direkten Erhalt der gewünschten Konzentration für die Primäremulsion erlauben,
b) Zugabe einer wässrigen Verdünnungsphase zu dieser Primäremulsion,
**dadurch gekennzeichnet, daß** der Emulgator der konzentrierten Primäremulsion durch ein anionisches, kationisches oder zwitterionisches grenzflächenaktives Mittel gebildet wird.

2. Verfahren gemäß Anspruch 1, **dadurch gekennzeichnet, daß** in der Stufe a) dieses grenzflächenaktive Mittel insgesamt in dieser wässrigen Anfangsphase vorhanden ist.

3. Verfahren gemäß Anspruch 1, **dadurch gekennzeichnet, daß** in der Stufe a) dieses grenzflächenaktive Mittel insgesamt oder zum Teil in diese flüssigen bituminösen Phase vorhanden ist.

4. Verfahren gemäß einem beliebigen der Ansprüche 1 bis 3, **dadurch gekennzeichnet, daß** in der Stufe a) dieses grenzflächenaktive Mittel ein kationisches grenzflächenaktives Mittel ist.

5. Verfahren gemäß Anspruch 4, **dadurch gekennzeichnet, daß** in der Stufe a) die Menge der anfänglichen wässrigen Phase derart ist, daß sie zu einer Primäremulsion führt, welche 75 bis 97 Gew.-% bituminöses Bindemittel, bevorzugt 80 bis 95 Gew.-% enthält.

6. Verfahren gemäß einem beliebigen der Ansprüche 4 und 5, **dadurch gekennzeichnet, daß** in der Stufe b) die Menge an wässriger Verdünnungsphase derart ist, daß sie zu einer Emulsion führt, welche 50 bis 70 Gew.-% von bituminösem Bindemittel enthält.

7. Verfahren gemäß einem beliebigen der vorhergehenden Ansprüche, **dadurch gekennzeichnet, daß** die wässrige Anfangsphase außerdem einen natürlichen oder synthetischen Latex enthält und daß das bituminöse Bindemittel ein nicht modifiziertes bituminöses Bindemittel ist.

8. Verfahren gemäß einem beliebigen der vorhergehenden Ansprüche, **dadurch gekennzeichnet, daß** die Stufe b) ohne Zwischenlagerung der Primäremulsion durchgeführt wird.

9. Verfahren gemäß einem beliebigen der vorhergehenden Ansprüche, **dadurch gekennzeichnet, daß** in der Stufe b) diese wässrige Verdünnungsphase kein grenzflächenaktives Mittel enthält.

10. Verfahren gemäß einem beliebigen der Ansprüche 1 bis 9, **dadurch gekennzeichnet, daß** in der Stufe b) diese wässrige Verdünnungsphase ein ergänzendes grenzflächenaktives Mittel enthält, welches mit dem bei der Herstellung der Primäremulsion verwendeten grenzflächenaktiven Mittel verträglich ist.

11. Verfahren gemäß einem beliebigen der vorhergehenden Ansprüche, **dadurch gekennzeichnet, daß** in der Stufe b) die Temperatur der wässrigen Verdünnungsphase 20 bis 50°C beträgt.

12. Verfahren gemäß einem beliebigen der vorhergehenden Ansprüche, **dadurch gekennzeichnet, daß** es die Zusatzstufe umfaßt, welche in der erneuten Verdünnung der erhaltenen Emulsion durch Zugabe von einer oder mehreren zusätzlichen wässrigen Verdünnungsphasen besteht.

13. Verfahren gemäß anspruch 12, **dadurch gekennzeichnet, daß** jede zusätzliche wässrige Verdünnungsphase ein oder mehrere zusätzliche grenzflächenaktive Mittel umfaßt.

14. Verfahren gemäß einem beliebigen der Ansprüche 12 oder 13, **dadurch gekennzeichnet, daß** jede zusätzliche wässrige Verdünnungsphase einen oder mehrere Zusatzmittel wie Antigelmittel, Stabilisatoren, Verdickungsmittel oder natürliche oder synthetische Latices umfaßt.

15. Verfahren gemäß einem beliebigen der vorhergehenden Ansprüche, **dadurch gekennzeichnet, daß** die erhaltene Emulsion eine höhere Viskosität als diejenige der entsprechenden Emulsion von gleicher Formulierung, welche durch Mischen unter der Wirkung derselben Scherenergie einer wässrigen Phase und eine bituminösen Phase erhalten wurde, aufweist

## Claims

1. Method for the manufacture of a bituminous binder emulsion suitable for the construction and maintenance of roads, and having a controlled rupture speed, the method comprising:
a) the preparation of a concentrated primary emulsion containing an emulsifier and at least 65% by weight in the case of an anionic emulsion and at least 70% by weight in the case of other emulsions, respectively, of bituminous binder, by mixing, under the effect of a mechanical shearing energy and in the presence of the emulsifier, an initial aqueous phase and a liquid bituminous phase, this mixture being produced continuously, the aqueous phase and the liquid bituminous phase being introduced in proportions enabling the desired concentration for the primary emulsion to be obtained directly; and
b) the addition of an aqueous diluting phase to the primary emulsion,
**characterised in that** the emulsifier of the concentrated primary emulsion is constituted by an anionic, cationic or zwitterionic surfactant.

2. Method according to claim 1, **characterised in that**, in step a), all of the surfactant is present in the initial aqueous phase.

3. Method according to claim 1, **characterised in that**, in step a), all or some of the surfactant is present in the liquid bituminous phase..

4. Method according to any one of claims 1 to 3, **characterised in that**, in step a), the surfactant is a cationic surfactant.

5. Method according to claim 4, **characterised in that**, in step a), the amount of initial aqueous phase is such that it leads to a primary emulsion containing from 75 to 97% by weight of bituminous binder, preferably from 80 to 95% by weight.

6. Method according to either claim 4 or claim 5, **characterised in that**, in step b), the amount of aqueous diluting phase is such that it leads to an emulsion containing from 50 to 70% by weight of bituminous binder.

7. Method according to any one of the preceding claims, **characterised in that** the initial aqueous phase also comprises a natural or synthetic latex and **in that** the bituminous binder is a non-modified bituminous binder.

8. Method according to any one of the preceding claims, **characterised in that** step b) is carried out without intermediate storage of the primary emulsion.

9. Method according to any one of the preceding claims, **characterised in that**, in step b), the aqueous diluting phase does not comprise a surfactant.

10. Method according to any one of claims 1 to 9, **characterised in that**, in step b), the aqueous diluting phase comprises an additional surfactant compatible with the surfactant used in the preparation of the primary emulsion.

11. Method according to any one of the preceding claims, **characterised in that**, in step b), the temperature of the aqueous diluting phase is from 20 to 50°C.

12. Method according to any one of the preceding claims, **characterised in that** it comprises the additional step that consists in re-diluting the resulting emulsion by adding one or more additional aqueous diluting phases.

13. Method according to claim 12, **characterised in that** each additional aqueous diluting phase comprises one or more additional surfactants.

14. Method according to either claim 12 or claim 13, **characterised in that** each additional aqueous phase comprises one or more additives, such as anti-gelling agents, stabilisers, thickening agents or natural or synthetic latexes.

15. Method according to any one of the preceding claims, **characterised in that** the resulting emulsion has a viscosity higher than that of the corresponding emulsion that has the same formulation and that is obtained by mixing an aqueous phase and a bituminous phase under the effect of the same shearing energy.
